# EUROPEAN PATENT APPLICATION

(11) **EP 4 572 323 A1**
(43) Date of publication of application: **18.06.2025**
(21) Application number: 23217190.0
(22) Date of filing: 15.12.2023
(51) Int. Cl.: H04Q 11/00

(54) **AN OPTICAL SWITCHING DEVICE, AN OPTICAL SENSOR DEVICE AND A METHOD FOR OPTICAL SWITCHING**

(71) Applicant: Imec VZW, 3001 Leuven (BE); Stichting IMEC Nederland, 5656 AE Eindhoven (NL)
(72) Inventor: JANSEN, Roelof, 3001 Heverlee (BE); ROMME, Jac, 3118 JP Schiedam (NL)
(74) Representative: AWA Sweden AB

(57) **Abstract**

An optical switching device (100) comprises: an input (102) for receiving an optical signal and a plurality of outputs (104a-h), wherein the optical switching device (100) provides an output optical signal at a selected output (104c); a sequence of Mach-Zehnder interferometers (MZIs) (110a-g) having a switcher input (112), a default switcher output (114) and a selectable switcher output (116), wherein each default switcher output (114) of the MZIs is connected to the switcher input of a following MZI and wherein each MZI (110a-g) in a default mode directs an input optical signal to the default switcher output (114); wherein the optical switching device (100) selects the selectable switcher output (116) of a selected MZI (110c) to form the selected output (104c) by providing a control signal to the selected MZI (110c) for directing the input optical signal of the selected MZI (110c) to the selectable switcher output (116).

## Description

### Technical field

The present description relates to optical switching for selecting an output to which an optical signal is to be provided. The present description relates to an optical switching device and a method for optical switching. The present description also relates to an optical sensor device comprising the optical switching device.

### Background

In many applications of integrated photonics, there is a need for controlling a path taken by an optical signal. In particular, the optical signal may need to be switched to be selectively provided to one of a plurality of components that should each receive the optical signal when selected.

For instance, in a light detection and ranging (Lidar) application, the optical signal may need to be provided in a selectable manner to one or more transmitters of an array for output of the optical signal towards a target or to one or more receivers of an array for providing a reference signal to be compared to a reflected signal from the target.

Since optical switching may need to be provided between a large number of outputs (e.g., associated with different components of an array), the optical switching may typically be performed through a hierarchical structure, such as a tree.

Optical switching may be achieved by an optical switcher using splitting of the optical signal in combination with at least one phase shifter for controlling a relation between split optical signals. The at least one phase shifter may thus be used for selecting to which output of the optical switcher that the optical signal is provided.

However, optical loss of a sequence of optical switchers through which the optical signal is transmitted may accumulate, which may lead to a weak optical signal at the output. In addition, each optical switcher may introduce phase noise such that phase noise may also accumulate. If the optical signal is to be used for instance in a Lidar application, phase information is very important since it may carry information of a distance to the target, which distance is to be measured by the Lidar application.

Further, power consumption may be of high importance. For instance, if the optical switching is provided in a miniaturized system that may run on battery power, low power consumption may be very important to ensure long lifetime of a device. Thus, optical switching may need to be provided with low power consumption.

### Summary

An objective of the present description is to provide switching of an optical signal in a power efficient manner. Another objective of the present description is to provide switching of the optical signal while providing a limited phase noise to the optical signal.

These and other objectives are at least partly met by the invention as defined in the independent claims. Preferred embodiments are set out in the dependent claims.

According to a first aspect, there is provided an optical switching device comprising: an input for receiving an optical signal and a plurality of outputs, wherein the optical switching device is configured to direct the optical signal received at the input to one selected output among the plurality of outputs, such that the optical switching device is configured to provide an output optical signal at the selected output; a sequence of optical path switchers, wherein each optical path switcher in the sequence is a Mach-Zehnder interferometer (MZI) having a switcher input, a default switcher output and a selectable switcher output, wherein each default switcher output of the MZIs is connected to the switcher input of a following MZI in the sequence and wherein each of the MZIs in a default mode directs an input optical signal at the switcher input to the default switcher output, and wherein the selectable switcher outputs of the MZIs forms part of the plurality of outputs of the optical switching device; wherein a first MZI in the sequence is configured to receive the optical signal at the switcher input; and wherein the optical switching device is configured to select the selectable switcher output of a selected MZI in the sequence of MZIs to form the selected output by the optical switching device being configured to provide a control signal to the selected MZI for controlling the input optical signal at the switcher input of the selected MZI to be directed to the selectable switcher output of the selected MZI for forming the output optical signal of the optical switching device at the selectable switcher output of the selected MZI.

The optical switching device provides a sequence of optical path switchers. The optical switching device comprises a sequence of optical path switchers, wherein each optical path switcher is an MZI having a default switcher output. The optical path switchers may be configured such that the input optical signal in the default mode is output to the default switcher output. This implies that the optical path switcher consumes no power or minimum amount of power when the optical signal is output to the default switcher output.

Each optical path switcher has a selectable switcher output forming part of the plurality of outputs of the optical switching device. Thus, the optical signal is controlled to be output to the selected output of the optical switching device by controlling the optical path switcher associated with the selected output to provide output to the selectable switcher output.

This implies that the optical signal may pass through all the optical path switchers that are before the selected MZI in the sequence. Hence, the optical signal may need to pass a large number of optical path switchers if an output is selected that is associated with an optical path switcher at the end or close to the end of the sequence.

However, thanks to the use of MZIs having a default mode directing the optical signal to the default switcher output, power consumption of the optical switching device is low even if the optical signal passes a large number of optical path switchers. Thus, only a single MZI (the selected MZI) needs to be actively controlled to select the output of the MZI to be directed to the selectable switcher output. This ensures that power consumption of the optical switching device is low.

Further, the optical path switchers may introduce phase noise into the optical signal passing through the optical path switchers. In particular, phase noise may be introduced through a control of a phase shifter used for selecting the output of the optical path switcher to which the optical signal is to be provided. Thanks to using MZIs having a default mode directing the input optical signal to the default switcher output, very small or no phase noise is introduced when the optical signal passes to the default switcher output of the MZI. This implies that phase noise may only be introduced by the selected MZI such that a very accurate optical signal with small phase noise may be provided at the selected output of the optical switching device.

The optical switching device may be provided using a photonic integrated circuit. Thus, all parts of the optical switching device may be provided in a single, integrated device. For instance, the optical switching device may be provided on a substrate in form of a small-size chip. This implies that the optical switching device may be miniaturized so as to enable use of the optical switching device in an apparatus or system that needs to be compact.

The optical switching device may comprise a plurality of waveguides for guiding the optical signal on the photonic integrated circuit. The waveguides may be patterned on the photonic integrated circuit to provide guiding of the optical signal along a desired path.

The photonic integrated circuit may also be provided with control electronics on the same substrate, integrated in a common structure. Alternatively, control electronics may be provided in a separate integrated circuit connected to the photonic integrated circuit.

The optical switching device may be configured to receive the optical signal for distribution within the photonic integrated circuit. The input may for instance be provided as an edge coupler of a waveguide through which the optical signal is provided. The optical signal may for instance be generated by a light source, such as a laser, arranged on a chip of the photonic integrated circuit. It should further be realized that the optical switching device may be connected to a component that provides the optical signal via a waveguide that may transition from the component providing the optical signal into forming part of the first MZI. Thus, the optical switching device need not necessarily comprise a distinctively defined input, but the input may rather be formed within a waveguide. However, according to another embodiment, the input may be a coupling interface for coupling the optical signal from an external unit not being part of the photonic integrated circuit into the optical switching device. For instance, the input may be provided as a grating coupler for coupling the optical signal into a waveguide.

Similarly, the plurality of outputs of the optical switching device may be configured to provide the output optical signal to another component within the photonic integrated circuit or to couple the output optical signal out of the photonic integrated circuit to provide the output optical signal to a component not being provided on the photonic integrated circuit.

It should further be realized that the optical switching device need not necessarily be implemented in a single photonic integrated circuit. The optical switching device may use waveguides for guiding the optical signal so as to provide accurate control of optical path of the optical signal. However, the waveguides need not necessarily be formed in a single photonic integrated circuit. For instance, according to an alternative, waveguides may be provided on a plurality of different substrates.

The optical switching device is configured to direct the optical signal to one selected output. This implies that a destination of the optical signal may be controlled such that the optical signal being input to the optical switching device is guided to the selected destination. Thus, a single destination may be defined, and the optical signal is provided to the single destination (the selected output).

The optical switching device is controllable such that the output being selected may be dynamically changed. Hence, the optical switching device may direct the optical signal to different selected outputs at different times. Thus, the optical signal may sequentially in time be provided to one of the different outputs of the optical switching device. The optical signal may be continuous in time such that the optical switching device may change at which output the output optical signal is provided while the optical signal is continuously received at the input of the optical switching device.

The control signal provided to the selected MZI may thus control the selected MZI to direct the input optical signal received at the switcher input of the selected MZI to the selectable switcher output of the selected MZI. Thus, the MZIs may receive a control signal one at a time and the MZI that receives the control signal at a particular point in time provides the output optical signal at its selectable switcher output.

The optical signal may be any signal based on propagation of light. The optical signal may be formed by any wavelength of light, which is not limited to visible light. Thus, the optical signal may for instance be provided as ultraviolet light or infrared light. The optical signal may be provided as a continuous signal but may also or alternatively be provided as a pulse or a sequence of pulses.

The optical signal may have a constant frequency and/or amplitude and the optical switching device may thus be used for simply providing output of light at a particular desired output. However, the optical signal may alternatively be modulated. For instance, an amplitude modulated or frequency modulated optical signal may be provided. The modulated optical signal may be continuous or pulsed.

The optical path switchers in the sequence are arranged in a sequential structure one after the other. Thus, the first optical path switcher is connected to a second optical path switcher, which is further connected to a third optical path switcher, and so forth. Hence, there is a first optical path switcher in the sequence and a last optical path switcher in the sequence. Further, when the optical signal passes from the first optical path switcher to the last optical path switcher, the optical signal passes through each of the optical path switchers of the optical switching device on the path from the first to the last optical path switcher.

Each optical path switcher is an MZI. Hence, the sequence of optical path switchers may be referred to interchangeably herein as the sequence of MZIs.

As used herein, the term "input optical signal" is used as referring to the signal that is received at a switcher input of an MZI. For all but the first MZI, the switcher input is connected to the default switcher output of a preceding MZI. Further, the input optical signal received at the switcher input of the first MZI is the optical signal received by the optical switching device. Since the MZI in default mode will pass the input optical signal to the default switcher output, this implies that the input optical signal received by each of the MZIs preceding and including the selected MZI will be based on the optical signal that is received by the optical switching device. However, the input optical signal received at the switcher input by an MZI, except for the first MZI, may not exactly correspond to the optical signal that is received by the optical switching device, because there may be some added noise and/or some optical loss due to the optical signal being passed through one or more preceding MZIs. It should be noted that the added noise and optical losses of the optical switching device are very small since in a non-selected state a MZI does only contribute to a small amount of loss and noise to the signal as it passes through the MZI to the default switcher output. It should further be noted that the MZIs that are arranged after the selected MZI in the sequence are also in default mode and as they are not in the selected path do not receive any input signal, hence they do not provide any signal to the default switcher output even if configured in default mode. These non-selected MZIs do not contribute to the noise or loss of the selected output.

The first MZI is configured to receive the optical signal input to the optical switching device at its switcher input. Each of the MZIs has a default switcher output connected to the switcher input to a following MZI in the sequence. It should be understood that there is no following MZI after the last MZI in the sequence. Thus, for the last MZI, no following MZI is provided. Instead, both the default switcher output and the selectable switcher output of the last MZI may form part of the plurality of outputs of the optical switching device. Hence, if the output optical signal is to be provided at the default switcher output of the last MZI, none of the MZIs needs to receive a control signal for controlling the input optical signal to be directed to the selectable switcher output. Rather, all MZIs in the sequence may in such case be operated in the default mode.

The MZIs are provided with a default mode such that the MZIs direct the input optical signal at the switcher input to the default switcher output in the default mode. Thus, the MZIs may be configured to be operated in the default mode unless controlled to operate differently (to direct the input optical signal to the selectable switcher output). This implies that the MZIs may be configured to consume no or very small amount of power in the default mode. The MZIs may be referred to as being calibration-free, since there may be no need for an additional control signal (calibration signal) to ensure that the input optical signal is accurately passed to the default switcher output in the default mode. The MZIs may be implemented as described in Lijia Song et al: "Toward calibration-free Mach-Zehnder switches for next-generation silicon photonics", Photonics Research, Vol. 10, Issue 3, pages 793-801, 2022.

The MZI splits the input optical signal into two branches such that the input optical signal propagates in two different branches before being recombined again. The MZI may be configured such that at least the first optical signal in the first branch is affected, for instance by a phase shifter. The recombination of the signals from the two branches may hence be dependent on the affecting of the optical signal in at least one of the branches, such that the MZI outputs the signal at a desired output. By providing an accurate manufacturing of the MZI, the MZI may be configured to output the optical signal at the default switcher output without need of any control of the signals propagating in the two branches. This implies that the MZI may be configured to consume no power in the default mode.

The MZI may for instance be provided with short branches in order to provide accurate function of the MZI in the default mode. However, this may imply that a strong control signal may be needed in order to switch the selected MZI to direct the input optical signal to the selectable switcher output. Since the optical switching device only needs to provide the control signal to a single MZI, this may still be a power efficient manner of controlling the output of the optical switching device.

However, it should be realized that, even if the MZI is not perfectly manufactured, the MZI may only need to be slightly affected in order to direct the input optical signal to the default switcher output. Thus, the MZI may be configured such that the MZI consumes less power, such as substantially less power, such as less than 20% of power or less than 10% of power, in the default mode compared to when the MZI is selected to direct the input optical signal to the selectable switcher output.

According to an embodiment, each of the MZIs comprises a first branch, a second branch, and a phase shifter associated with the first branch, wherein the MZI is configured to split the input optical signal for propagating a first optical signal along the first branch and a second optical signal along the second branch, wherein the phase shifter is configured to receive the control signal for causing a phase shift of the first optical signal, wherein the MZI is further configured to re-combine the first optical signal and the second optical signal into a re-combined optical signal and direct the re-combined optical signal to the default switcher output or the selectable switcher output based on constructive interference of the first and second optical signals, wherein the MZI is configured to provide constructive interference based on the phase shift of the first optical signal caused by the control signal for directing the re-combined optical signal to the selectable switcher output.

Thus, by controlling the first optical signal in the first branch using the phase shifter, the input optical signal may be directed by the MZI to a desired switcher output. In particular, if no control signal is provided to the phase shifter, the MZI may be configured to direct the input optical signal to the default switcher output.

The phase shifter may be configured to cause a phase shift of 180° based on the control signal. This may be utilized for ensuring a well-defined separation between the input optical signal being directed by the MZI to the default switcher output or to the selectable switcher output. However, it should be realized that the phase shift need not necessarily be 180°. Rather, a smaller phase shift may be used.

The selectable switcher output and the default switcher output may be physically arranged in relation to a location in which the first and second optical signals are recombined such that constructive interference of the first and second optical signals is provided at the default switcher output in absence of the control signal and at the selectable switcher output in presence of the control signal.

According to an embodiment, the phase shifter is a thermo-optical phase shifter.

A thermo-optical phase shifter may provide a phase shifted optical signal with low optical loss. Thus, the thermo-optical phase shifter may be advantageously used for providing low optical loss of the optical signal input to the optical switching device.

However, it should be realized that a different type of phase shifter may alternatively be used. For instance, a phase shifter based on free-carrier depletion may be used. Such phase shifter may have lower power consumption than a thermo-optical phase shifter but may have a higher optical loss. According to further alternatives, the phase shifter may be realized based on an electro-optical material or may be a phase shifter based on a micro-electromechanical system (MEMS).

The thermo-optical phase shifter may use a heater for heating a waveguide of the first branch. The heating of the waveguide may cause the refractive index of the waveguide to change such that a phase shift of the first optical signal to be re-combined with the second optical signal is provided.

It should be realized that even though a single phase shifter may be sufficient, each MZI may alternatively be provided with two phase shifters, such that a first phase shifter is associated with the first branch and a second phase shifter is associated with the second branch. The two phase shifters may thus be used in combination for providing a desired overall phase shift for directing the re-combined optical signal to the selectable switcher output.

According to an embodiment, the control signal is a modulated signal comprising a sequence of pulses.

For instance, the control signal may provide duty-cycling of the phase shifter to control the phase shifter to cause a desired phase shift of the optical signal in the branch to which the phase shifter is associated. This may be a power-efficient manner of ensuring that the desired phase shift is provided.

For instance, the control signal may be modulated by pulse width modulation. This may be used for efficiently controlling the temperature of a thermo-optical phase shifter. Using pulse width modulation of the control signal, the phase shifter may provide fast heating to a desired temperature without overshooting the desired temperature.

Thus, using a modulated control signal may ensure efficient control of the optical path of the optical signal through the optical switching device. However, the modulated signal may also introduce phase noise. For instance, if pulse width modulation is used, supply ripple may be provided by driving electronics at each pulse, which may translate into phase noise in the optical signal.

Thanks to using the sequence of optical path switchers such that only a single selected MZI needs to receive the control signal, phase noise is not accumulated from a plurality of MZIs. This implies that the efficient control by using pulse width modulation may be used while providing the output optical signal at the selected output with low phase noise.

It should be realized that the control signal may be modulated in alternative manners than using pulse width modulation. For instance, sigma-delta modulation may be alternatively used.

It should further be realized that the control signal need not necessarily be modulated. Rather, the control signal may be a direct current (DC) signal. Use of a DC signal may imply that phase noise from supply ripple in the selected MZI may be reduced or avoided.

According to an embodiment, each MZI is configured to pass the input optical signal through the MZI to the default switcher output or, based on receiving the control signal, to the selectable switcher output, wherein the MZI is configured to pass the input optical signal through the MZI with an optical loss lower than 1 dB, such as lower than 0.5 dB, such as lower than 0.2dB, such as lower than 0.1 dB, such as in a range of 0.05 - 0.1 dB.

This implies that the optical loss through each MZI is very small. Thus, the optical switching device may be configured to direct the optical signal to the selected output forming the output optical signal with an overall optical loss that is small from the optical signal input to the optical switching device.

According to a second aspect, there is provided an optical sensor device comprising: the optical switching device according to the first aspect; and an array of sensors for detecting an incident optical signal, wherein different outputs of the plurality of outputs of the optical switching device are connected to and associated with different sensors in the array of sensors.

Effects and features of this second aspect are largely analogous to those described above in connection with the first aspect. Embodiments mentioned in relation to the second aspect are largely compatible with the first aspect.

Thus, the optical switching device may be used together with an array of sensors. This implies that the optical switching device may be used for controlling the optical signal to be provided to desired sensor(s) in the array. Hence, the selected output of the optical switching device may be sequentially changed such that the optical signal is sequentially provided to the different sensors.

The optical switching device ensures that the optical signal may be sequentially provided to the sensors in a power efficient manner with low phase noise of the optical signal.

For instance, the sensors may be sequentially active for performing measurements, wherein the sensors that are active at a particular point in time receive the optical signal from the optical switching device. A subset of sensors may be active at the same time, such as a row of sensors in the array being active at the same time. Thus, the subset of sensors may be connected to the same output of the optical switching device such that all the sensors in the subset receive the optical signal at the same time.

Each sensor may for instance comprise a photo-sensitive element for detecting light incident on the sensor.

According to an embodiment, the optical sensor device is configured to combine a detected signal of a sensor with the output optical signal provided by the output of the optical switching device associated with the sensor.

Thus, the output optical signal from the optical switching device may provide input for allowing information of interest to be extracted from the detected signal of a sensor. For instance, the output optical signal may ensure that particular frequency and/or phase information of the detected signal is extracted facilitating analysis of the detected signal.

For instance, light from an environment may be incident on the sensor, which light forms a detected signal of the sensor. The output optical signal provided by the optical switching device is combined with the detected signal to allow analysis of the environment.

The output optical signal may be provided to the sensor such that the sensor may provide a representation of the detected signal being combined with the output optical signal from the optical switching device.

According to an embodiment, the sensors of the array of sensors are configured to detect a frequency-modulated continuous wave (FMCW) light detection and ranging (Lidar) signal.

In FMCW Lidar, a frequency modulated light signal is emitted into the environment and a reflected signal is detected by the sensors. The reflected signal is further combined with a reference signal, which may be based on the signal emitted into the environment. By combining the reflected signal and the reference signal, a beat frequency may be formed, which is due to the frequency modulation of the reflected signal and the reference signal not being synchronized. The beat frequency depends on a distance to a target that generated the reflected signal.

According to a third aspect, there is provided a method for optical signal switching, said method comprising: receiving an optical signal at an input of a first Mach-Zehnder interferometer (MZI) in a sequence of MZIs, wherein each MZI in the sequence has a switcher input, a default switcher output and a selectable switcher output, wherein each default switcher output of the MZIs is connected to the switcher input of a following single MZI in the sequence, if any; selecting only one MZI in the sequence to form a selected MZI for output of an output optical signal; passing, by each MZI in the sequence preceding the selected MZI, an input optical signal received at the switcher input to the default switcher output; providing a control signal to the selected MZI for controlling the input optical signal at the switcher input of the selected MZI to be directed to the selectable switcher output of the selected MZI; and outputting the output optical signal at the selectable switcher output of the selected MZI.

Effects and features of this third aspect are largely analogous to those described above in connection with the first and second aspects. Embodiments mentioned in relation to the third aspect are largely compatible with the first and second aspects.

Thanks to the optical signal being passed through MZIs in default mode and only the one selected MZI being controlled to direct its input optical signal at the switcher input to the selectable switcher output, the method may provide optical signal switching in a power efficient manner. Only the one selected MZI may consume power based on receiving the control signal.

Further, phase noise may only be introduced by the selected MZI such that the output optical signal from the selected MZI may have a very low phase noise.

The optical signal passes through all the MZIs that are before the selected MZI in the sequence. It should be realized that if the first MZI is the selected MZI, there are no MZIs preceding the selected MZI and, hence, the input optical signal is directed to the selectable switcher output of the first MZI without any MZI passing an input optical signal to the default switcher output of that first MZI. Thus, no optical signal is passed to the remainder of the MZIs. Further, it should be realized that for the last MZI in the sequence of MZIs, no following MZI is provided. Instead, both the default switcher output and the selectable switcher may be used for outputting the output optical signal. Hence, if the output optical signal is to be provided at the default switcher output of the last MZI, none of the MZIs needs to receive a control signal for controlling the input optical signal to be directed to the selectable switcher output. Rather, all MZIs in the sequence may in such case be operated in the default mode.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a schematic view of an optical switching device according to an embodiment.
Fig. 2 is a schematic view of a Mach-Zehnder interferometer of the optical switching device.
Fig. 3 is a graph illustrating a control signal to a phase shifter of the Mach-Zehnder interferometer.
Fig. 4 is a schematic view of an optical sensor device according to an embodiment.
Fig. 5 is a flow chart of a method according to an embodiment.

### Detailed description

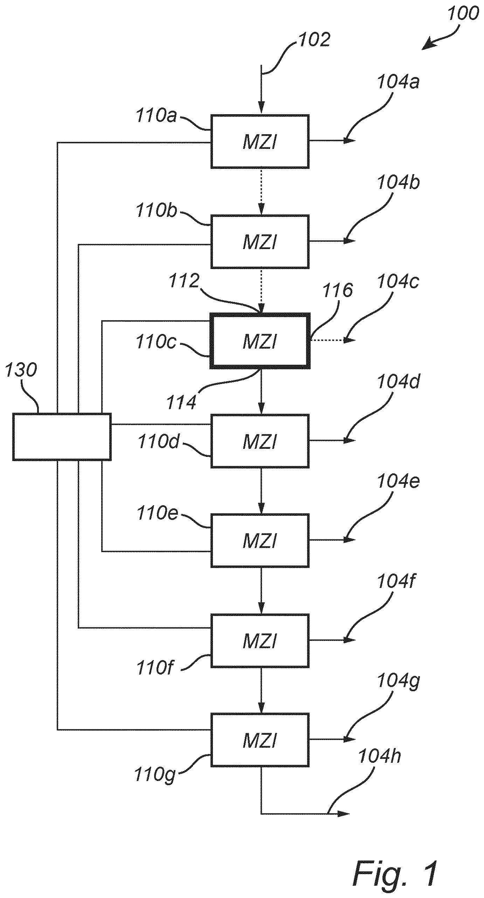

Referring now to Fig. 1, an optical switching device 100 according to an embodiment will be described. The optical switching device 100 comprises an input 102 and a plurality of outputs 104a-h. The optical switching device 100 is configured to direct an optical signal received at the input 102 to provide an output optical signal at one selected output among the plurality of outputs 104a-h.

The optical switching device 100 comprises a sequence of optical path switchers 110a-g. The optical path switchers 110a-g are arranged one after the other such that the optical signal may propagate sequentially through all the optical path switchers 110a-g.

It should be realized that the optical path switchers 110a-g being arranged in a sequence does not necessarily imply that the optical path switchers 110a-g are arranged in a particular physical relation to each other. On the contrary, the optical path switchers 110a-g may be arranged in any physical relation to each other. However, the optical path switchers 110a-g are connected such that the optical signal will sequentially propagate through the optical path switchers 110a-g.

As indicated in Fig. 1, each optical path switcher 11 0a-g is a Mach-Zehnder interferometer (MZI), which may be configured to allow an input optical signal to be directed to one of at least two possible outputs of the MZI. Hereinafter, the optical path switchers 110a-g may be interchangeably referred to as MZIs 110a-g.

As an example, a third MZI 110c in the sequence will be further described. However, it should be realized that the below description of the third MZI 110c applies to all the MZIs 110a-g in the sequence, unless specifically stated otherwise.

The MZI 110c comprises a switcher input 112, a default switcher output 114 and a selectable switcher output 116. The default switcher output 114 is connected to a switcher input of a following MZI in the sequence. Thus, for the third MZI 110c, the default switcher output 114 is connected to the switcher input of the fourth MZI 110d.

The MZI 110c is configured to receive an input optical signal at the switcher input 112. The MZI 110c is further configured to, in a default mode, direct the input optical signal to the default switcher output 114. The MZI 110c is configured such that the MZI 110c directs the input optical signal to the default switcher output 114 unless a control signal is provided to the MZI 110c. Thus, the MZI 110c need not receive any control signal and does not consume any power in the default mode.

The MZI 110c may further be configured to receive a control signal for selecting the MZI 110c to direct the input optical signal at the switcher input 112 to the selectable switcher output 116 instead. The selectable switcher output 116 may constitute or may be connected to an output 104c of the optical switching device 100, such that the selectable switcher output 116 forms part of the plurality of outputs 104a-h of the optical switching device 100.

Thus, one of the MZIs in the sequence may be selected for output such that the optical switching device 100 provides the output optical signal at the selected output associated with the selected MZI. Fig. 1 shows the third MZI 110c being selected. Thus, reference may below be made to the third MZI 110c as being the selected MZI. However, it should be realized that any of the MZIs 110a-g may be the selected MZI at a particular point in time.

The optical signal received at the input 102 of the optical switching device 100 is provided as the input optical signal at the switcher input of the first MZI 110a in the sequence. Then, each of the MZIs 110a-b preceding the selected MZI 110c passes the input optical signal at the respective switcher input to the default switcher output.

The optical switching device 100 is configured to provide the control signal to the selected MZI 110c. The selected MZI 110c is affected by the control signal such that the input optical signal at the switcher input 112 is directed to the selectable switcher output 116. This implies that the output optical signal is provided at the selectable switcher output 116 of the selected MZI 110c.

The optical switching device 100 need only provide a control signal to a single MZI 110c that is associated with the output at which it is desired that the output optical signal is to be provided. This implies that only a single MZI 110c need to consume power, such that the optical switching device 100 may provide optical switching using a low power consumption.

In addition, the control signal may give cause to a phase noise in the optical signal. Since only a single MZI 110c need to be provided with a control signal, phase noise will not accumulate from plural MZIs. This implies that phase information of the optical signal may be insignificantly affected by the optical switching device 100. This is very advantageous if the phase information of the output optical signal from the optical switching device 100 is to be used, such as if the output optical signal provides a local oscillator signal for a frequency modulated continuous wave (FMCW) light detection and ranging (Lidar) application.

The MZI 110c may be configured to pass the input optical signal to the default switcher output 112 such that the MZI 110c only provides a signal at a single output. However, the MZI 110c may cause a small optical loss of the input optical signal. The optical loss may be smaller than 1 dB, such as smaller than 0.5 dB, such as smaller than 0.2 dB, such as smaller than 0.1 dB, such as in a range of 0.05 - 0.1 dB.

However, the optical signal may need to pass a large number of MZIs 110a-g. In particular, if the optical output signal is to be provided from an output associated with the last MZI 110g in the sequence, the optical signal needs to pass all the MZIs 110a-g in the sequence. Having a small optical loss in the MZIs 110a-g ensures that the accumulated optical loss is acceptable. The MZIs 110a-g may be carefully manufactured to ensure that the optical loss is small.

The optical switching device 100 may be implemented using waveguides. Thus, all the optical signals discussed herein may be propagated through waveguides that control a path taken by the optical signal. Optical signals may be coupled from one waveguide to another in order to allow changing a path of the optical signal.

The waveguides of the optical switching device 100 may be arranged on a common substrate such that the optical switching device 100 may form part of a photonic integrated circuit.

The optical switching device 100 may also comprise electronic circuitry, e.g., for generating the control signals for controlling the MZIs 110a-g. The electronic circuitry may be arranged on the same substrate as the waveguides of the optical switching device 100. Alternatively, the electronic circuitry may be arranged on a different substrate providing connection line(s) to the optical switching device 100 such that at least the control signal may be transmitted from the electronic circuitry to affect propagation of the optical signal in the waveguides of the optical switching device 100.

For instance, waveguides may be formed as a photonic integrated circuit, the electronic circuitry may be formed as an electronic integrated circuit and both integrated circuits may be mounted on a common carrier.

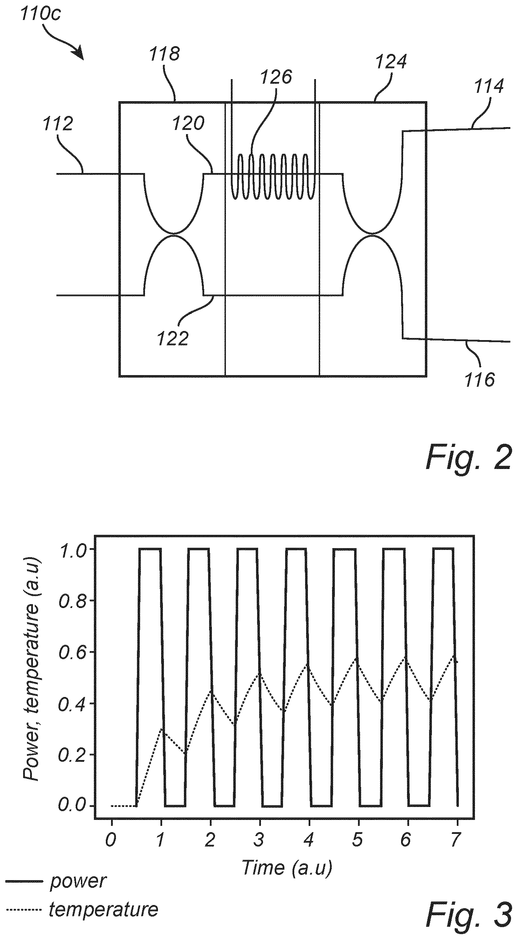

Referring now to Fig. 2, the MZI 110c will be described in further detail. It should be realized that the MZI 110c is generally described in relation to Fig. 2 and that the MZI 110c may be implemented in different manners as understood by the person skilled in the art.

The MZI 110c comprises the switcher input 112. The switcher input 112 is connected to an optical splitter 118, which is configured to split the input optical signal received at the switcher input 112 into a first branch 120 and a second branch 122.

Each of the first branch 120 and the second branch 122 may be formed by a waveguide, which may have equal lengths. The input optical signal may thus be split into a first optical signal that propagates along the first branch 120 and a second optical signal that propagates along the second branch 122.

The MZI 110c further comprises a re-combining unit 124, wherein the first and second branches 120, 122 are arranged such that constructive interference of the first and second optical signals may occur such that the first and second optical signals are re-combined into a single optical signal. The re-combining unit 124 comprises two outputs connected to the default switcher output 114 and the selectable switcher output 116, respectively, of the MZI 110c.

The MZI 110c further comprises a phase shifter 126, which is associated with one of the first and second branches, here illustrated as the first branch 120. The phase shifter 126 is configured to, in a selectable manner, cause a phase shift of the first signal propagating through the first branch 120. It should be realized that another phase shifter may be provided associated with the second branch 122 and that the two phase shifters could be used together for affecting both of the first optical signal and the second optical signal for controlling which output that receives the re-combined optical signal. It should further be realized that, in other embodiments, a dummy phase shifter may be arranged in relation to the second branch 122 such that a (near) perfect symmetry between the first branch 120 and the second branch 122 may be achieved.

The MZI 110c is configured to direct the input optical signal to the default switcher output 114 in the default mode. Thus, if the phase shifter 126 is not activated, the input optical signal is directed to the default switcher output 114.

If the phase shifter 126 is controlled to apply a phase shift to the first optical signal, the phase shifter 126 may cause a phase shift of the first optical signal reaching the re-combining unit 124 such that the MZI 110c provides the output optical signal at the selectable switcher output 116. The phase shift of the first optical signal corresponds to the phase of the first optical signal at the re-combining unit 124 being different depending on whether the phase shifter 126 is activated or not. However, the phase shift of the first optical signal also implies that a phase relation between the first optical signal and the second optical signal at the re-combining unit 124 is different depending on whether the phase shifter 126 is activated or not.

The phase shifter 126 is configured to receive the control signal for applying the phase shift to the first optical signal.

The MZI 110c may be configured such that in absence of any control signal, the MZI 110c passes the input optical signal to the default switcher output 114. This may be achieved by controlling manufacturing of the MZI 110c such that the first and second branches 120, 122 are properly balanced. For instance, the branches 120, 122 may be short in order to ensure that the length of the branches 120, 122 is very accurate. It should also be realized that the MZI 110c may be tuned, after manufacture of waveguides of the MZI 110c, such that the waveguides may be slightly changed for ensuring that the input optical signal is passed to the default switcher output 114 if no control signal is provided to the phase shifter 126. For instance, such tuning may be achieved by laser trimming of one or more of the waveguides.

The phase shifter 126 may be a thermo-optical phase shifter. Thus, the phase shifter 126 may provide a thermal signal that provides an optical affect to cause the phase shift in the MZI 110c.

The phase shifter 126 may comprise a heater, which is arranged in contact with or close to the first branch 120. As shown in Fig. 2, the heater may comprise a conductive line that is wound around the first branch 120.

The heater may be controlled by the control signal. Thus, upon receiving an electrical control signal, the heater dissipates heat to the first branch 120. The heater may simply be configured to dissipate heat based on the electrical control signal being conducted through the conductive line of the heater.

When the control signal is provided, the heater may dissipate heat to the waveguide of the first branch 120 such that the temperature of the waveguide increases. This further implies that the refractive index of the waveguide changes such that the propagation of the first optical signal in the first branch 120 is affected and a phase shift of the first optical signal is provided at the re-combining unit 124.

The phase shifter 126 may be configured to cause a 180° phase shift based on being controlled by the control signal. Thus, the phase of the first optical signal at the re-combining unit 124 when the phase shifter 126 is activated by the control signal may differ by 180° to the phase of the first optical signal at the re-combining unit 124 if the phase shifter 126 would not be activated.

As shown in Fig. 1, the optical switching device 100 may further comprise a driver circuit 130. The driver circuit 130 may be connected to the phase shifter 126. The driver circuit 130 may be configured to generate the control signal and may be configured to provide the control signal to the phase shifter 126 when desired.

The optical switching device 100 may comprise a plurality of dedicated driver circuits, such that each driver circuit is connected to a respective phase shifter 126. However, the optical switching device 100 may alternatively comprise a single driver circuit 130, wherein the control signal from the driver circuit 130 may be selectively provided to the phase shifter 126 of the selected MZI 110c.

Referring now to Fig. 3, the control signal provided to the phase shifter 126 may be a modulated signal comprising a sequence of pulses. As shown in Fig. 3, pulse width modulation of the control signal may be provided.

The pulse width modulation may be used for duty-cycling of the phase shifter 126. This may provide a power efficient manner of affecting the MZI 110c such that the input optical signal is directed to the selectable switcher output 116. In addition, the pulse width modulation may ensure that a stable temperature of the waveguide of the first branch 120 is provided and that the desired temperature may be quickly reached.

However, the use of a modulated signal may imply that the driver circuit 130 provides a ripple in the control signal at pulse edges. This may translate to a small variation of the temperature of the waveguide, which may further cause phase noise of the first optical signal. Hence, the control signal may generate phase noise in the output optical signal from the optical switching device 100. Thanks to the optical switching device 100 allowing the selected output to be selected based on providing the control signal only to a single selected MZI 110c, phase noise from plural MZIs will not accumulate in the output optical signal. Hence, the optical switching device 100 may be configured to provide the output optical signal with a small phase noise.

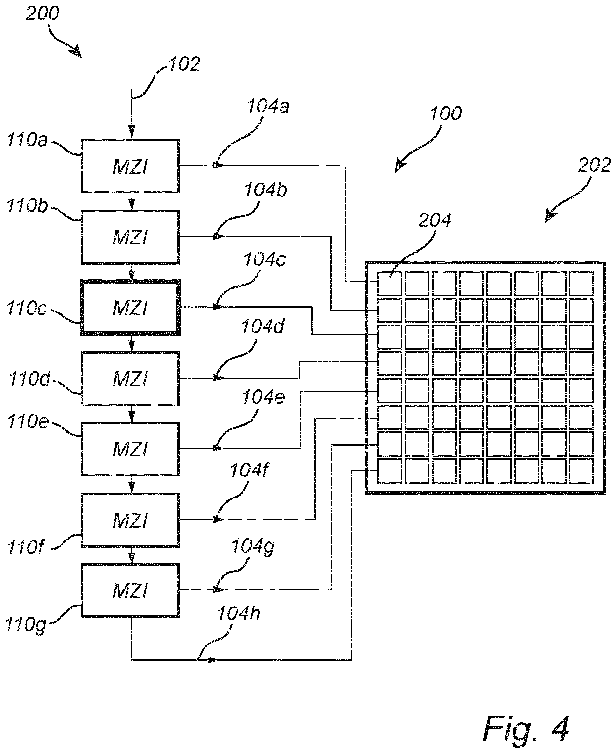

Referring now to Fig. 4, the optical switching device 100 is illustrated being used in an optical sensor device 200 for a FMCW Lidar application. It should be realized that the optical switching device 100 may alternatively be used in combination with a plurality of sensors for other applications.

The optical sensor device 200 comprises a plurality of sensors 204 arranged in an array 202. The optical switching device 100 is connected to and associated with the plurality of sensors 204. Thus, the possibility of selecting an output at which the optical signal is provided, using the optical switching device 100, can be advantageously used in the optical sensor device 200 for providing the output optical signal from the optical switching device 100 to different sensors 204 at different points in time.

For instance, the output optical signal may be sequentially provided at the different outputs 104a-h of the optical switching device 100 for sequentially providing the output optical signal to different sensors 204 in the array 202.

Each output 104a-h of the optical switching device 100 may be associated with a plurality of sensors 204 in the array 202. For instance, each output 104a-h may be associated with a respective row of sensors 204 in the array 202. This implies that a subset of sensors 204 is associated with each output 104a-h. This may be useful to allow the output optical signal to be simultaneously provided to each sensor in the subset, allowing simultaneous read-out from a row of sensors 204.

Each output 104a-h may be directly connected to one or more sensors 204. Thus, the output optical signal may be provided to the sensor 204 for detection by the sensor 204. Alternatively, the output optical signal may be provided to read-out circuitry of the sensor 204 in order to provide input to the read-out of signals from the sensor 204.

The output optical signal from the optical switching device 100 may be combined with a detected signal of a sensor 204. In an embodiment, the output optical signal is provided to a photo-sensitive element of the sensor 204. The photo-sensitive element may thus receive the output optical signal from the optical switching device 100 as well as a signal incident on the photo-sensitive element from an environment. Thus, the detected signal from the environment is combined with the output optical signal in the photo-sensitive element such that the output from the photo-sensitive element is based on the combination of the output optical signal and the signal from the environment.

In particular, the optical sensor device 200 may be configured to perform FMCW Lidar measurements. The optical sensor device 200 may thus be configured to transmit a frequency-modulated signal into an environment. The frequency-modulated signal may comprise a frequency chirp such that frequency of the signal is linearly increased during a period. The frequency-modulated signal may be split in the optical sensor device 200 such that a first part is emitted into the environment and a second part forms a local oscillator signal that is used as reference for determining a distance to a target in the environment.

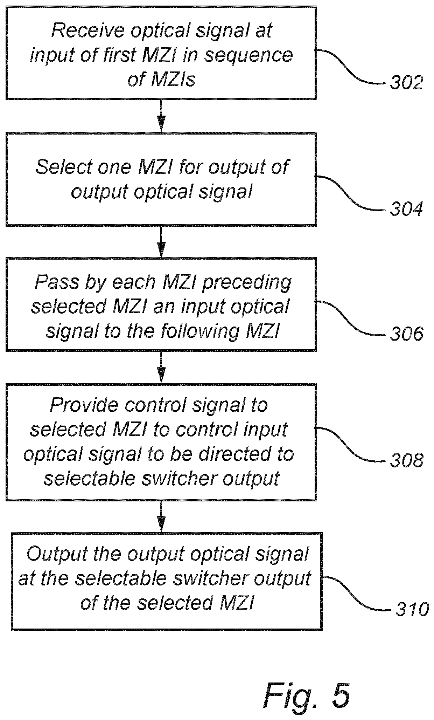

Referring now to Fig. 5, a method for optical signal switching will be described. The method may use the optical switching device 100 described above.

The method comprises receiving 302 an optical signal at an input of a first MZI in a sequence of MZIs. Each MZI in the sequence has a switcher input, a default switcher output, and a selectable switcher output. The MZIs are connected in the sequence such that the default switch output of a MZI in the sequence is connected to the switcher input of a following MZI in the sequence.

The method further comprises selecting 304 only one or a single MZI in the sequence to form a selected MZI for output of an output optical signal. Thus, the method selects a single output to which the received optical signal is to be directed.

The method further comprises passing 306, by each MZI in the sequence preceding the selected MZI, an input optical signal received at the switcher input to the default switcher output. Each MZI has a default mode in which the input optical signal is passed to the default switcher output. Thus, in absence of any control signal, the MZI may pass the input optical signal to the default switcher output. Since the default switcher output is connected to the switcher input of the following MZI, this implies that the optical signal received by the first MZI will be passed in sequence through each of the MZIs preceding the selected MZI, wherein each MZI preceding the selected MZI is in the default mode. The MZIs may be configured to consume no or very small amount of power in the default mode, such that the method provides a power efficient manner of providing the signal to the selected MZI.

The method further comprises providing 308 a control signal to the selected MZI for controlling the input optical signal at the switcher input of the selected MZI to be directed to the selectable switcher output of the selected MZI. Thus, a control signal may be provided only to the one selected MZI for controlling the selected MZI to direct the input optical signal at its switcher input to the selectable switcher output, such that the selected MZI is not operated in its default mode. The control signal may introduce phase noise to the optical signal. However, since the method only provides the control signal to a single MZI for controlling to which output that the received optical signal is to be directed, the optical signal is accurate with a small amount of phase noise based on a single control signal.

The method further comprises outputting 310 the output optical signal at the selectable switcher output of the selected MZI. Thus, the output optical signal is provided at the desired output, such that the method ensures that the received optical signal is switched to the desired output.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An optical switching device (100) comprising:
an input (102) for receiving an optical signal and a plurality of outputs (104a-h), wherein the optical switching device (100) is configured to direct the optical signal received at the input (102) to one selected output (104c) among the plurality of outputs (104a-h), such that the optical switching device (100) is configured to provide an output optical signal at the selected output (104c);
a sequence of optical path switchers, wherein each optical path switcher in the sequence is a Mach-Zehnder interferometer, MZI, (110a-g) having a switcher input (112), a default switcher output (114) and a selectable switcher output (116), wherein each default switcher output (114) of the MZIs is connected to the switcher input of a following MZI in the sequence and wherein each of the MZIs (110a-g) in a default mode directs an input optical signal at the switcher input (112) to the default switcher output (114), and wherein the selectable switcher outputs of the MZIs (110a-g) forms part of the plurality of outputs (104a-h) of the optical switching device (100);
wherein a first MZI (110a) in the sequence is configured to receive the optical signal at the switcher input; and
wherein the optical switching device (100) is configured to select the selectable switcher output (116) of a selected MZI (110c) in the sequence of MZIs (110a-g) to form the selected output (104c) by the optical switching device (100) being configured to provide a control signal to the selected MZI (110c) for controlling the input optical signal at the switcher input (112) of the selected MZI (110c) to be directed to the selectable switcher output (116) of the selected MZI (110c) for forming the output optical signal of the optical switching device (100) at the selectable switcher output (116) of the selected MZI (110c).

2. The optical switching device according to claim 1, wherein each of the MZIs (110a-g) comprises a first branch (120), a second branch (122), and a phase shifter (126) associated with the first branch (120), wherein the MZI (110a-g) is configured to split the input optical signal for propagating a first optical signal along the first branch (120) and a second optical signal along the second branch (122), wherein the phase shifter (126) is configured to receive the control signal for causing a phase shift of the first optical signal, wherein the MZI (110a-g) is further configured to re-combine the first optical signal and the second optical signal into a re-combined optical signal and direct the re-combined optical signal to the default switcher output (114) or the selectable switcher output (116) based on constructive interference of the first and second optical signals, wherein the MZI (110a-g) is configured to provide constructive interference based on the phase shift of the first optical signal caused by the control signal for directing the re-combined optical signal to the selectable switcher output (116).

3. The optical switching device according to claim 2, wherein the phase shifter (126) is a thermo-optical phase shifter.

4. The optical switching device according to any one of the preceding claims, wherein the control signal is a modulated signal comprising a sequence of pulses.

5. The optical switching device according to any one of the preceding claims, wherein each MZI (110a-g) is configured to pass the input optical signal through the MZI (110a-g) to the default switcher output (114) or, based on receiving the control signal, to the selectable switcher output (116), wherein the MZI (110a-g) is configured to pass the input optical signal through the MZI (110a-g) with an optical loss lower than 1 dB, such as lower than 0.5 dB, such as lower than 0.2dB, such as lower than 0.1 dB, such as in a range of 0.05 - 0.1 dB.

6. An optical sensor device (200) comprising:
the optical switching device (100) according to any one of the preceding claims; and
an array (202) of sensors (204) for detecting an incident optical signal, wherein different outputs of the plurality of outputs (104a-h) of the optical switching device (100) are connected to and associated with different sensors (204) in the array (202) of sensors (204).

7. The optical sensor device according to claim 6, wherein the optical sensor device (200) is configured to combine a detected signal of a sensor (204) with the output optical signal provided by the output of the optical switching device (100) associated with the sensor (204).

8. The optical sensor device according to claim 6 or 7, wherein the sensors (204) of the array (202) of sensors (204) are configured to detect a frequency-modulated continuous wave, FMCW, light detection and ranging, Lidar, signal.

9. A method for optical signal switching, said method comprising:
receiving (302) an optical signal at an input of a first Mach-Zehnder interferometer, MZI, in a sequence of MZIs, wherein each MZI in the sequence has a switcher input, a default switcher output and a selectable switcher output, wherein each default switcher output of the MZIs is connected to the switcher input of a following single MZI in the sequence, if any;
selecting (304) only one MZI in the sequence to form a selected MZI for output of an output optical signal;
passing (306), by each MZI in the sequence preceding the selected MZI, an input optical signal received at the switcher input to the default switcher output;
providing (308) a control signal to the selected MZI for controlling the input optical signal at the switcher input of the selected MZI to be directed to the selectable switcher output of the selected MZI; and
outputting (310) the output optical signal at the selectable switcher output of the selected MZI.
